# EUROPEAN PATENT SPECIFICATION

(11) **EP 2 754 345 B1**
(45) Date of publication and mention of the grant of the patent: **06.07.2016**
(21) Application number: 13425005.9
(22) Date of filing: 11.01.2013
(51) Int. Cl.: A01D 34/82, A01D 75/20

(54) **Device for safely cutting grass**
Vorrichtung zum sicheren Schneiden von Gras
Dispositif pour couper de l'herbe en toute sécurité

(43) Date of publication of application: 16.07.2014
(73) Proprietor: Bernini, Fabrizio, 52021 Bucine - Arezzo (IT)
(72) Inventor: Bernini, Fabrizio, 52021 Bucine - Arezzo (IT)
(74) Representative: Bellomia, Paolo

(56) References cited:
- US-A- 3 103 094
- US-A- 4 051 647
- US-A- 4 916 813
- US-B1- 7 543 432

## Description

This invention relates to a device for safely cutting grass; in particular, a cutting blade for machinery for cutting grass, weeds, branches and the like, equipped with an accident-prevention safety device for the user.

### Background art

There are prior art cutting blades inserted in machinery for cutting grass in general, for example trimmers, mowers, robots programmed for gardening, hereinafter referred to for brevity as "grass cutting devices".

As is known, such grass cutting devices are equipped with cutting blades designed to cut grass, weeds and the like, blades which are obviously in themselves dangerous for the user or any other people or animals present close to the grass cutting devices while they are being used.

To limit the dangerousness of such devices equipped with blades, regulations were introduced, designed to ensure that during use such blades cannot easily reach elements other than the grass, in particular inflexible, rigid or semi-rigid elements, such as legs, arms or other parts of the bodies of people or animals.

However, there is always a real risk of accidental injury which cannot be completely eliminated, since the grass cutting device must in any case be supplied with a sharpened blade able to cut the grass, which is what the device was designed to do.

US 3103094 discloses a rotary vegetation cutting blades provided with a flat, circular, metal disc or plate which forms the main body portion of the blade. The disc terminates at its periphery in flange and is formed along its outer edge portion with three equidistantly and circumferentially spaced, generally rectangular slots. Each of the slots 17 is defined on the opposite sides thereof by a leading edge and a trailing edge.

US7543432 discloses apparatuses and methods for preventing damage to a lawnmower engine and crankshaft when the lawnmower cutting blade encounters an obstructive object. A cutting device for a lawnmower is provided and can include an elongate base member, at least one cutting element pivotably attached to the elongate base member, and a biasing mechanism that engages the cutting element and elongate base member. The at least one cutting element can include a blade portion and a drive engagement portion. The cutting element can pivot when the blade portion strikes an obstructive object such that the blade portion absorbs the impact and retracts to form a blunt shape to prevent damage to the cutting element. The pivoting of the cutting element causes the drive engagement portion to disengage from the crankshaft of the lawnmower to prevent damage thereto

Therefore, in this context, the technical problem which forms the basis of this invention is that of proposing a grass cutting device able to cut the grass and more generally any bendy material, which is harmless or does not cause serious injury to rigid or semi-rigid materials such as parts of the bodies of people or animals, trees, plants, fencing or enclosures, shrubs, stones, etc.

### Disclosure of the invention

Accordingly the invention solves that problem with a grass cutting device such as that indicated in claim 1.

In fact, the Applicant for this application found that a grass cutting device comprising a body equipped with a support for a set of cutting elements which are separate from each other and arranged along a peripheral edge of the support in such a way that they project outwards from it, wherein the body also comprises a set of guard elements arranged along said peripheral edge in such a way that between one of the cutting elements and another there is at least one of the guard elements, can reduce accidental injuries to the user of the cutting device or other people or animals close to the machinery while it is being used.

In fact, due to the speed of the cutting device and/or a possible impact with at least one of the guard elements, the grass, being flexible, will bend forward then spring up again at the cutting device, the zone where the grass will be cut.

In that zone, the grass cutting device according to this invention, rotating at high speed, will have as a point of impact with a possible user at least one of the guard elements which, thanks to its thickness, will prevent the grass cutting device from penetrating through the thickness of the skin and therefore accidentally cutting parts of the body of a person or animal.

In this context and in the appended claims, the term "grass" refers not just to grass in the most common sense, but also to weeds and the like and, more generally, any material to be cut which can bend when subjected to slight lateral pressure.

Preferably, only one guard element is positioned between one of the above-mentioned cutting elements and another.

In this way, there is continuous alternation between a guard element and a cutting element along the peripheral edge of the body of the grass cutting device according to this invention.

Preferably, said set of cutting elements consists of at least four, more preferably at least six, and even more preferably at least eight cutting elements. At the same time, the set of guard elements consists of at least four, more preferably at least six, and even more preferably at least eight guard elements.

It shall be understood that the number of cutting elements and guard elements may be any number higher than one.

In this way, the body of the grass cutting device according to this invention comprises a considerable number of cutting elements, alternating with a corresponding number of guard elements, in such a way as to make grass cutting operations more effective. The greater the number of cutting elements present in the device, the safer the grass cutting device will be.

Preferably, each of the guard elements has a substantially curved or rounded profile, with the concavity facing inwards.

In this way, thanks to the substantially curved or rounded shape of the guard elements, that is to say, without sharp or pointed elements, greater protection is guaranteed.

Preferably, each of said guard elements has a thickness substantially equal to the thickness of the peripheral edge of the support.

In this way, since said thicknesses are substantially equal, there can be a certain continuity of thickness along the entire peripheral edge of the body of the grass cutting device according to this invention.

In one embodiment, each of the guard elements is made in one piece with said peripheral edge of the support.

In this way, the guard elements are fixed and therefore an integral part of the peripheral edge.

In another embodiment, one or more of the guard elements can be applied to the body in a removable fashion.

Each portion of the peripheral edge interposed between two of the guard elements adopts a substantially curved profile, with the concavity facing outwards

In this way, there is a continuous change in curvature along the peripheral edge of the body of the device according to this invention.

In fact, whilst at each guard element there is a predetermined radius of curvature considering the fact that the concavity of the peripheral edge in that guard zone is facing inwards towards the body, vice versa, at each of the portions of the edge which are interposed between two of the guard elements, there is an opposite radius of curvature, due to the fact that the concavity of the peripheral edge in that cutting zone is facing outwards away from the body.

Each of the cutting elements is positioned substantially at the centre of each of said portions of the edge which have a substantially curved profile with the concavity facing outwards.

In this way, each cutting element is in an intermediate position, equidistant from one guard element and the other.

Preferably, each of the cutting elements comprises a substantially flat surface having at least a first cutting side which extends from the peripheral edge away from the body, where said first cutting side forms an actual cutting portion of the grass cutting device.

More preferably, said substantially flat surface also has a second cutting side, opposite to the first cutting side and substantially parallel with it, which extends from the peripheral edge away from the body.

In this way, whatever its direction of rotation, clockwise or anti-clockwise, during use, the grass cutting device according to this invention can suitably cut the grass which is located in that actual cutting portion located between the first (or second) cutting side of the substantially flat surface and the peripheral edge of the body of the grass cutting device according to this invention.

Preferably, said substantially flat surface of each of the cutting elements is provided with at least one sharp edge at the outer end of each of the first and second cutting sides, said edge facing outwards from the body of the grass cutting device according to this invention.

In this way, the presence of said sharp edge at the end of each of the first and second cutting sides facilitates grass cutting along the respective first or second cutting side.

In one embodiment, each of the cutting elements is made in one piece with said peripheral edge of the support.

In this way, the cutting elements are an integral part of the peripheral edge, for example by means of overmoulding on the device support.

In another embodiment, one or more of the cutting elements can be applied to the body in a removable fashion, for example with threaded connections or rivets.

Advantageously, the cutting elements are installed at the lower surface of the support in such a way as to facilitate grass cutting operations.

Moreover, preferably said guard elements are made from a lubricated material, for example Teflon, that is to say, materials with a high level of resistance to adherence and/or with a low friction coefficient and/or which are self-lubricating, such as materials made up of molecules like PTFE, molybdenum disulphide, carbon fibre, aramid fibres, graphite.

For example, some such materials are known under the brand names: Teflon, Fluon, Algoflon, Hostaflon.

In this way, the guard elements are better able to slide on the materials against which the guard elements make contact during use of the grass cutting device according to this invention, further increasing the device safety level.

Preferably, the thickness of the guard elements is such that it is not possible to cut human or animal skin during rotation during use of the grass cutting device. The thickness of the guard elements is preferably between approximately 5 mm and approximately 10 mm.

The thickness of the guard elements is directly proportional to the grass cutting device safety level. That is to say, the greater the thickness of the guard elements is, the greater the safety and, consequently, the lower the risk of accidental injury will be.

Another parameter which affects the safety level of the grass cutting device according to this invention is how far the guard elements project compared with the cutting element, that is to say, if the external diameter swept by the guard elements is several millimetres greater than the diameter swept by the cutting elements of the device body, maximum safety is achieved, and the grass cutting device according to this invention will be harmless or will not cause serious injury to rigid or semi-rigid materials such as the bodies of people or animals.

Vice versa, if the external diameter swept by the guard elements is several millimetres less than the diameter swept by the cutting elements, then the safety level will be lower and said difference in millimetres will be equal to the depth of a possible cut in the skin caused by impact between the cutting element and, for example, parts of a person's body.

Moreover, based on the thickness of the guard element and the difference between its projection and the projection of the cutting element from the body of the cutting device, it is possible to define the degree of the possible injury, that is to say, the safety level to be assigned to the grass cutting device.

These and other aims, which are more apparent in the detailed description which follows, are accordingly achieved according to this invention by a grass cutting device with the structural and functional features described in the appended independent claim.

Further embodiments of the invention are defined in the corresponding dependent claims.

The invention is illustrated in more detail below with reference to the accompanying drawings which illustrate a preferred, non-limiting example embodiment of the invention.

In the drawings:
Figure 1 is a plan view of a grass cutting device according to this invention;
Figure 2 is a perspective view of the device of Figure 1;
Figure 3 is an enlarged view of a detail from Figure 2.

Hereinafter, with reference to the accompanying drawings, is a description of a grass cutting device 1 according to this invention.

The device 1 according to this invention comprises a body 2 equipped with a support 3 for a set of cutting elements 4 which are separate from each other.

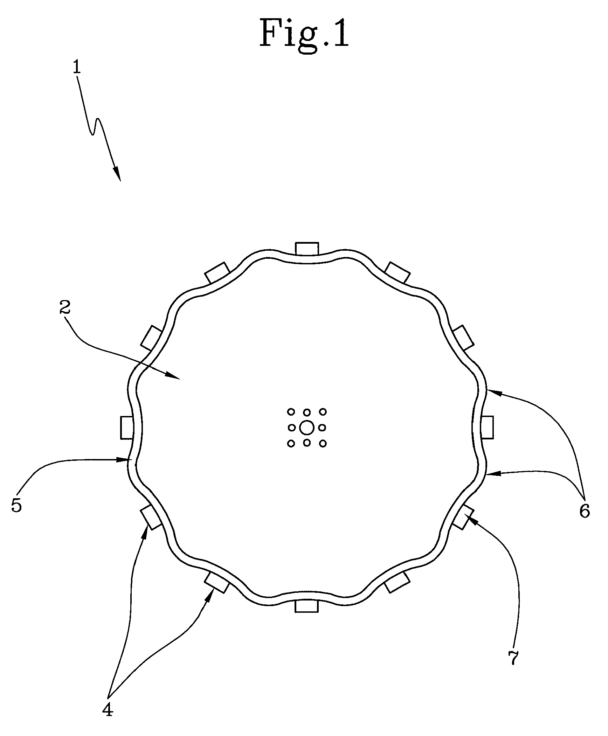

In the particular embodiment of the invention shown in Figure 1 there are twelve cutting elements 4, which are arranged along the peripheral edge 5 of the body 2, equidistant from one another.

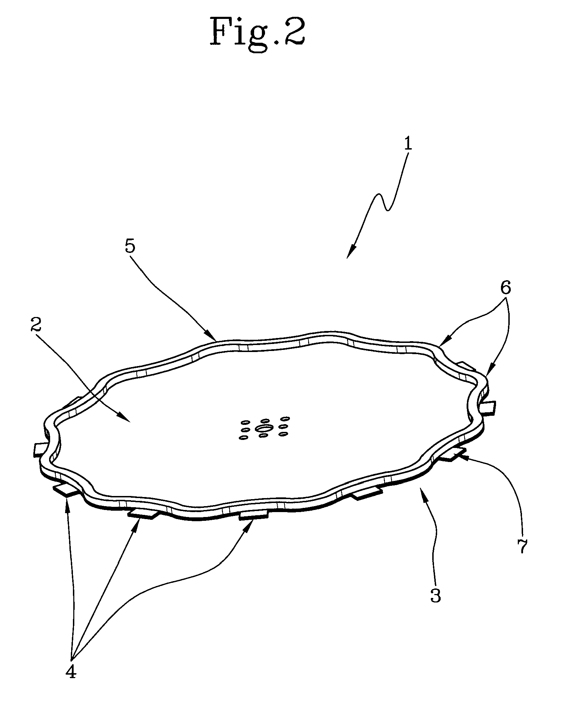

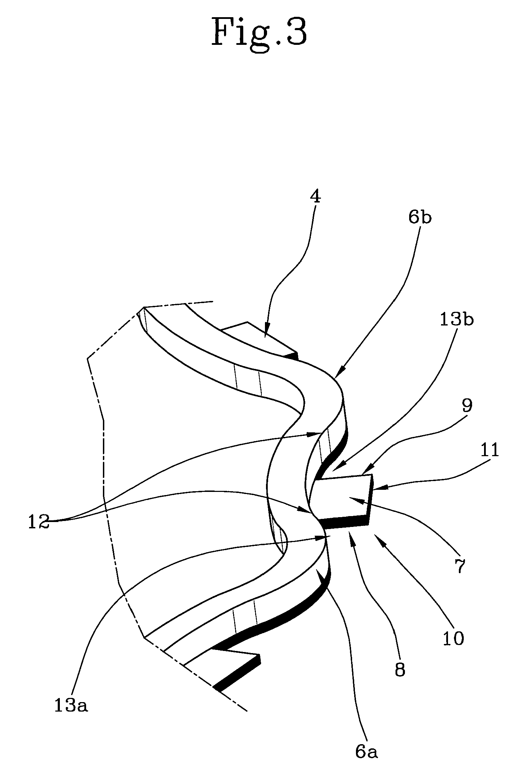

As Figures 2 and 3 clearly show, the cutting elements 4 are positioned close to the lower surface of the device 1, that is to say on the side closest to the grass to be cut.

Each cutting element 4 comprises a substantially flat surface 7 having a first cutting side 8 and a second cutting side 9, which is opposite to the first cutting side 8 and substantially parallel with it. The cutting sides extend outwards from the peripheral edge 5.

Moreover, said substantially flat surface 7 of each cutting element 4 is provided, respectively at the outer end of each of the first and second cutting sides 8, 9, with a sharp edge 10, 11 for cutting, facing outwards from the body.

In the particular embodiment of the invention shown in Figures 1 to 3, each of the cutting elements 4 is made in one piece with the support 3 in such a way that it is an integral part of it. If the support 3 is made of plastic material, the cutting elements 4 may be fixed to it for example by means of overmoulding.

Figures 1 to 3 also show, along the peripheral edge 5 of the support 3, a set (twelve) of guard elements 6 which are arranged in such a way that each guard element 6 alternates with a corresponding cutting element 4.

As Figures 1 and 3 show more clearly, each of the guard elements 6 has a substantially curved profile, with the concavity facing inwards towards the body 2.

In this way, the bump-shaped curved part of the guard elements 6 allows them to perform their protective function in the best possible way.

Between two adjacent guard elements 6 there is a portion 12 of peripheral edge 5 which adopts a substantially curved profile with the concavity facing outwards, that is to say, with a concavity which is opposite to that of the guard elements 6.

Therefore, there is a continuous change in the curvature, with concavities alternately facing outwards away from and inwards towards the body 2 along the peripheral edge 5 of the device 1 according to this invention.

As shown in Figures 1 to 3, a cutting element 4 is positioned at the centre of each portion 12 of the peripheral edge 5.

Moreover, each of the guard elements 6 is made in one piece with the peripheral edge 5 of the support 3 and has a thickness substantially equal to the thickness of said peripheral edge 5.

Advantageously, the guard elements 6 are made of a lubricated material so that they are better able to slide on the materials with which they make contact.

Preferably, the guard elements are made of a lubricated material, for example Teflon, that is to say, materials with a high level of resistance to adherence and/or with a low friction coefficient and/or which are self-lubricating, such as materials made up of molecules like PTFE, molybdenum disulphide, carbon fibre, aramid fibres, graphite.

For example, some such materials are known under the brand names: Teflon, Fluon, Algoflon, Hostaflon.

To achieve maximum protection, the external diameter swept by the guard elements 6 must be equal to or even greater than the diameter swept by the cutting elements 4. That is to say, the guard elements must project outwards away from the body 2 to an extent which is greater than or equal to the projection of the cutting elements 4.

The greater the difference in the projection between the guard elements 6 and the cutting elements 4, the greater the safety will be and, consequently, the lower the risk of accidental injury will be.

Based on the difference in millimetres between projection of the cutting elements 4 from the body 2 and projection of the guard elements 6, it is possible to define the level of a possible injury.

If said difference is minimal, the device 1 according to this invention will only minimally scratch the skin in the event of an injury.

Vice versa, if the projection of the guard elements 6 is considerably less than the projection of the cutting elements 4 from the body 2, there is a strong risk that a possible injury may be deep and therefore serious.

During use of the grass cutting device 1 according to this invention, the body equipped with cutting elements 4 rotates very quickly, at around 3000 revolutions per minute.

Due to the speed of the cutting device 1 and/or a possible impact with the guard elements 6 and/or impact with "bender" elements belonging to the grass cutter, the grass to be cut, being flexible, will bend and then spring up again in the empty gaps created between one guard element 6 and one cutting side 8, 9 of the cutting element 4, the zone where the grass will be cut.

If the device 1 rotates clockwise, the grass to be cut will be located in the cutting zone 13a between the guard element 6a (Figure 3) and the cutting side 8 of the cutting element 4. Vice versa, if the device rotates anticlockwise, the grass to be cut will be located in the cutting zone 13b between the guard element 6b and the cutting side 9 of the cutting element 4.

In those cutting zones 13a, 13b, the grass cutting device 1 according to this invention, rotating at high speed, will have as a point of possible impact with a part of the body of the user at least one of the guard elements 6a, 6b which, thanks to:
- its thickness, will not penetrate the part of the body of the user and
- thanks to its greater projection compared with that of the cutting elements 4 will prevent them from making contact with the user and therefore from penetrating through the thickness of the skin and accidentally cutting parts of the body of people or animals.

The invention was described with reference to a preferred embodiment, but it shall be understood that it may be modified and adapted without thereby departing from the scope of the claims.

## Claims

1. A grass cutting device (1) comprising a body (2) equipped with a support (3) for a set of cutting elements (4) which are separate from each other and arranged along a peripheral edge (5) of the support (3) in such a way that they project outwards from it, wherein the body (2) also comprises a set of guard elements (6) arranged along said peripheral edge (5) in such a way that between one of the cutting elements (4) and another there is at least one of the guard elements (6),
wherein each portion (12) of the peripheral edge (5), interposed between two guard element (6), adopts a substantially curved profile, with the concavity facing outwards away from the body (2), **characterized in that**
each of the cutting elements (4) is positioned substantially at the centre of each of said portions (12) of the edge (2) which have a substantially curved profile with the concavity facing outwards.

2. The grass cutting device (1) according to claim 1, wherein only one guard element (6) is positioned between one cutting element (4) and another.

3. The grass cutting device (1) according to either of the preceding claims, wherein the set of cutting elements (4) is fixed to the support (3) at the lower portion of the support (3).

4. The grass cutting device (1) according to any one of the preceding claims, wherein each guard element (6) has a substantially curved profile, with the concavity facing inwards towards the body (2).

5. The grass cutting device (1) according to any one of the preceding claims, wherein each guard element (6) has a thickness substantially equal to the thickness of the peripheral edge (5) of the support (3).

6. The grass cutting device (1) according to any one of the preceding claims, wherein each guard element (6) is made in one piece with the peripheral edge (5) of the support (3).

7. The grass cutting device (1) according to any one of the preceding claims, wherein each of the cutting elements (4) comprises a substantially flat surface (7) having at least a first cutting side (8) which extends from the peripheral edge (5) outwards away from the body (2).

8. The grass cutting device (1) according to claim 7, wherein said substantially flat surface (7) also has a second cutting side (9), opposite to the first cutting side (8) and substantially parallel with it, which extends from the peripheral edge (5) outwards away from the body (2).

9. The grass cutting device (1) according to claim 7 or 8, wherein between one of the guard elements (6) and the first cutting side (8) and/or the second cutting side (9) there is a cutting zone (13) for cutting the grass.

10. The grass cutting device (1) according to claim 8 or claims 8 plus 9, wherein said substantially flat surface (7) of each of the cutting elements (4) is provided with at least one sharp edge (10, 11) respectively at the outer end of each of the first and second cutting sides (8, 9).

11. The grass cutting device (1) according to any one of the preceding claims, wherein each cutting element (4) is made in one piece with the body (2) or may be applied to it in a removable fashion.

12. The grass cutting device (1) according to any one of the preceding claims, wherein the guard elements (6) project from the body (2) further than the cutting elements (4) project from the body (2).

## Patentansprüche

1. Vorrichtung zum Schneiden von Gras (1), umfassend einen Körper (2), ausgestattet mit einer Halterung (3) für einen Satz Schneidelemente (4), die voneinander getrennt und entlang einer umfangseitigen Kante (5) der Halterung (3) angeordnet sind, sodass sie davon nach außen gerichtet hervorstehen, wobei der Körper (2) auch einen Satz Schutzelemente (6) umfasst, die entlang der umfangseitigen Kante (5) angeordnet sind, sodass sich zwischen einem der Schneidelemente (4) und einem anderen mindestens eins der Schutzelemente (6) befindet, wobei ein jeder Abschnitt (12) der umfangseitigen Kante (6) zwischen zwei Schutzelementen (6) eingesetzt ist und ein im Wesentlichen gekrümmtes Profil einnimmt, wobei der Hohlraum wegführend vom Körper (2) nach außen zeigt, **dadurch gekennzeichnet, dass** ein jedes der Schneidelemente (4) im Wesentlichen in der Mitte eines jeden der Abschnitte (12) der Kante (2) positioniert ist, die ein im Wesentlichen gekrümmtes Profil aufweisen, wobei der Hohlraum nach außen zeigt.

2. Vorrichtung zum Schneiden von Gras (1) nach Anspruch 1, wobei nur ein Schutzelement (6) zwischen einem Schneidelement (4) und einem anderen positioniert ist,

3. Vorrichtung zum Schneiden von Gras (1) nach einem der vorhergehenden Ansprüche, wobei der Satz Schneidelemente (4) an der Halterung (3) am unteren Abschnitt der Halterung (3) fixiert ist.

4. Vorrichtung zum Schneiden von Gras (1) nach einem der vorhergehenden Ansprüche, wobei ein jedes Schutzelement (6) ein im Wesentlichen gekrümmtes Profil aufweist, wobei der Hohlraum nach innen, zum Körper (2) hinführend zeigt.

5. Vorrichtung zum Schneiden von Gras (1) nach einem der vorhergehenden Ansprüche, wobei ein jedes Schutzelement (6) eine Dicke aufweist, die im Wesentlichen gleich der Dicke der umfangseitigen Kante (5) der Halterung (3) ist.

6. Vorrichtung zum Schneiden von Gras (1) nach einem der vorhergehenden Ansprüche, wobei ein jedes Schutzelement (6) aus einem Stück mit der umfangseitigen Kante (5) der Halterung (3) gefertigt ist.

7. Vorrichtung zum Schneiden von Gras (1) nach einem der vorhergehenden Ansprüche, wobei ein jedes der Schneidelemente (4) eine im Wesentlichen flache Oberfläche (7) umfasst, aufweisend mindestens eine erste Schneidseite (8), die sich von der umfangseitigen Kante (5) nach außen, wegführend vom Körper (2) erstreckt.

8. Vorrichtung zum Schneiden von Gras (1) nach Anspruch 7, wobei die im Wesentlichen flache Oberfläche (7) auch eine zweite Schneidseite (9) aufweist, die gegenständig zur ersten Schneidseite (8) und im Wesentlichen parallel zu dieser angeordnet ist, die sich von der umfangseitigen Kante (5) nach außen, wegführend vom Körper (2) erstreckt.

9. Vorrichtung zum Schneiden von Gras (1) nach Anspruch 7 oder 8, wobei zwischen einem der Schutzelemente (6) und der ersten Schneidseite (8) und/oder der zweiten Schneidseite (9) ein Schneidbereich (13) zum Schneiden des Grases bereitgestellt ist.

10. Vorrichtung zum Schneiden von Gras (1) nach Anspruch 8 oder Anspruch 8 und 9, wobei die im Wesentlichen flache Oberfläche (7) eines jeden der Schneidelemente (4) mit mindestens einer scharfen Kante (10, 11) versehen ist, jeweils am äußeren Ende von sowohl der ersten als auch der zweiten Schneidseite (8, 9).

11. Vorrichtung zum Schneiden von Gras (1) nach einem der vorhergehenden Ansprüche, wobei ein jedes Schneidelement (4) aus einem Stück mit dem Körper (2) gefertigt ist oder an diesem auf unlösbare Weise angebracht werden kann.

12. Vorrichtung zum Schneiden von Gras (1) nach einem der vorhergehenden Ansprüche, wobei die Schutzelemente (6) aus dem Körper (2) weiter hervorstehen als die Schneidelemente (4) aus dem Körper (2) hervorstehen.

## Revendications

1. Dispositif pour couper de l'herbe (1) comprenant un corps (2) équipé d'un support (3) pour un ensemble d'éléments de découpe (4) qui sont séparés les uns des autres et disposés le along d'un bord périphérique (5) du support (3) de manière à ce qu'ils dépassent vers l'extérieur de celui-ci, dans lequel le corps (2) comprend aussi un ensemble d'éléments de protection (6) disposés le long dudit bord périphérique (5) de manière à ce qu'entre un des éléments de découpe (4) et un autre se trouve au moins un des éléments de protection (6), dans lequel chaque partie (12) du bord périphérique (5), interposée entre deux éléments de protection (6), adopte un profilé substantiellement incurvé avec la concavité orientée vers l'extérieur du corps (2), **caractérisé en ce que** chacun des éléments de découpe (4) est positionné substantiellement au centre de chacune desdites parties (12) du bord (2) qui possède un profilé substantiellement incurvé avec la concavité orientée vers l'extérieur.

2. Dispositif pour couper de l'herbe (1) selon la revendication 1, dans lequel un seul élément de protection (6) est positionné entre un élément de découpe (4) et un autre.

3. Dispositif pour couper de l'herbe (1) selon l'une quelconque des revendications précédentes, dans lequel l'ensemble d'éléments de découpe (4) est fixé au support (3) au niveau de la partie inférieure du support (3).

4. Dispositif pour couper de l'herbe (1) selon l'une quelconque des revendications précédentes, dans lequel chaque élément de protection (6) possède un profilé substantiellement incurvé avec la concavité orientée vers l'intérieur en direction du corps (2).

5. Dispositif pour couper de l'herbe (1) selon l'une quelconque des revendications précédentes, dans lequel chaque élément de protection (6) possède une épaisseur substantiellement égale à l'épaisseur du bord périphérique (5) du support (3).

6. Dispositif pour couper de l'herbe (1) selon l'une quelconque des revendications précédentes, dans lequel chaque élément de protection (6) forme un seul tenant avec le bord périphérique (5) du support (3).

7. Dispositif pour couper de l'herbe (1) selon l'une quelconque des revendications précédentes, dans lequel chacun des éléments de découpe (4) comprend une surface substantiellement plate (7) ayant au moins un premier côté de découpe (8) qui se développe du bord périphérique (5) vers l'extérieur du corps (2).

8. Dispositif pour couper de l'herbe (1) selon la revendication 7, dans lequel ladite surface substantiellement plate (7) comporte aussi un second côté de découpe (9), opposé au premier côté de découpe (8) et substantiellement parallèle à celui-ci, qui se prolonge à partir du bord périphérique (5) vers l'extérieur du corps (2).

9. Dispositif pour couper de l'herbe (1) selon les revendications 7 ou 8, dans lequel entre un des éléments de protection (6) et le premier côté de découpe (8) et/ou le second côté de découpe (9) se trouve une zone de découpe (13) pour couper l'herbe.

10. Dispositif pour couper de l'herbe (1) selon la revendication 8 ou selon les revendications 8 et 9, dans lequel ladite surface substantiellement plate (7) de chacun des éléments de découpe (4) est pourvue d'au moins une arête vive (10, 11) respectivement en correspondance de l'extrémité extérieure de chacun des premier et second côtés de découpe (8, 9).

11. Dispositif pour couper de l'herbe (1) selon l'une quelconque des revendications précédentes, dans lequel chaque élément de découpe (4) forme un seul tenant avec le corps (2) ou peut être appliqué à celui-ci de façon amovible.

12. Dispositif pour couper de l'herbe (1) selon l'une quelconque des revendications précédentes, dans lequel chaque élément de protection (6) dépasse davantage du corps (2) que les éléments de découpe (4) ne dépassent de ce dernier (2).
